(19) Europäisches Patentamt
European Patent Office
Office européen des brevets

(11) **EP 2 796 053 B1**

(12) **EUROPEAN PATENT SPECIFICATION**

(45) Date of publication and mention of the grant of the patent:
**23.01.2019 Bulletin 2019/04**

(21) Application number: **12860850.2**

(22) Date of filing: **12.12.2012**

(51) Int Cl.:
***A23F 3/16*** *(2006.01)* ***A23F 3/20*** *(2006.01)*

(86) International application number:
**PCT/JP2012/082209**

(87) International publication number:
**WO 2013/094494 (27.06.2013 Gazette 2013/26)**

(54) **METHOD FOR PRODUCING PURIFIED TEA EXTRACT**

VERFAHREN ZUR HERSTELLUNG EINES GEREINIGTEN TEEEXTRAKTS

PROCÉDÉ DE PRODUCTION D’EXTRAIT DE THÉ PURIFIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2011 JP 2011279691**

(43) Date of publication of application:
**29.10.2014 Bulletin 2014/44**

(73) Proprietor: **Kao Corporation**
**Chuo-ku**
**Tokyo 103-8210 (JP)**

(72) Inventors:
- **SHIKATA, Kenichi**
  **Kamisu-shi**
  **Ibaraki 314-0103 (JP)**
- **OHMINAMI, Hideo**
  **Haga-gun**
  **Tochigi 321-3497 (JP)**
- **SATO, Hitoshi**
  **Kamisu-shi**
  **Ibaraki 314-0103 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 591 017**
**EP-A1- 1 618 793**
**EP-A1- 2 119 374**
**JP-A- H10 165 096**
**JP-A- H11 504 224**
**JP-A- 2004 159 634**
**JP-A- 2010 263 816**
**JP-A- 2010 263 816**

- **AKIRA SAKAMOTO ET AL.: ’The Compositions of the Respective Infusions of Sencha Brewed Three Times’ TEA RESEARCH JOURNAL vol. 94, 2002, pages 45 - 55, XP055162400**

EP 2 796 053 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of the Invention

The present invention relates to a production method for a purified tea extract.

Background of the Invention

With diversifying consumers' preference and increasing health consciousness, various beverages have been commercially available. Of those, tea beverages containing functional substances such as non-polymer catechins have attracted attention. The tea beverages are usually produced using a tea extract or the like by blending the functional substances such as non-polymer catechins in beverages in a dissolved state. However, depending on its kind, the tea extract blended in the tea beverages may reduce the commercial value owing to bitterness or astringency and turbidity.

Then, to solve such problems, various studies have been made on a purification method for a tea extract to be blended in a tea beverage. For example, there have been proposed, for example, a method involving dispersing a green tea extract in a mixed solution having a weight ratio of organic solvent/water of from 91/9 to 97/3 and bringing the mixture into contact with activated carbon and acid clay or activated clay to selectively remove caffeine without deterioration of color (Patent Document 1), a method involving bringing a green tea extract solution obtained from green tea leaves into contact with a sodium-type cation exchange resin to improve taste and flavor and to suppress formation of grounds and precipitations during long-term storage (Patent Document 2), and a method involving bringing a green tea extract into contact with a cation exchange resin of a food brand to remove metal ions in the extract, in particular, calcium and magnesium, resulting in improvement of transparency (Patent Document 3), or the like.

EP 1 591 017 A1 relates to a packaged beverage containing the following ingredients (A), (B) and (C):

(A) from 0.05 to 0.5 wt% of non-polymer catechins,
(B) from 0.008 to 0.033 wt% of sodium, and
(C) potassium,

wherein a weight ratio (B/C) of ingredient (B) to ingredient (C) is from 1 to 330, and a pH is 2 or higher but lower than 6.5.

EP 2 119 374 A1 relates to a packaged beverage containing:

(A) from 0.05 to 0.5 % by mass of non-polymer catechins;
(B) from 0.0012 to 0.12 % by mass of calcium;
(C) from 0.00012 to 0.006 % by mass of magnesium;
(D) from 0.000048 to 0.0024 % by mass of zinc;
(E) from 0.00004 to 0.002 % by mass of iron; and
(F) from 0.01 to 20 % by mass of a sweetener,

wherein a content mass ratio [(B)/(A)] of the calcium (B) to the non-polymer catechins (A) is from 0.001 to 1.0, (J) a percentage of gallate bodies in the non-polymer catechins is from 5 to 55 % by mass, and pH is from 2.5 to 5.1.

JP 2010-263816 A relates to a method for producing food and drink containing polyamine that comprises adding a salt solution to a plant/animal-originated raw material or leaves and stems of tea trees belonging to Camellia. The salt is selected from the group consisting of sodium chloride, magnesium chloride, and calcium chloride, and the plant/animal-originated raw material is selected from the group consisting of salmon milt, liver of pig, malt, soybean, fermented soybean, Oolong tea leaves, black tea leaves, go-piece size bean tea leaves, black soybean, persimmon leaves, and green tea leaves.

Citation List

Patent Document

[Patent Document 1] JP-A-2005-270094

[Patent Document 2] JP-A-2004-159634

[Patent Document 3] JP-A-11-504224

Summary of the Invention

The present invention provides a production method for a purified tea extract, comprising bringing a tea extract into contact with a hydrogen-type (H-type) cation exchange resin wherein the hydrogen ions have been exchanging for magnesium ions or lithium ions.

Also, the present invention provides a purified tea extract obtainable by the method and having a mass ratio of (magnesium+lithium)/non-polymer catechins of 0.1 or more, a mass ratio of potassium/non-polymer catechins of 0.26 or less, and a content of non-polymer catechins in a residue obtained by drying a sample with an electric thermostat dryer at 105°C for 3 hour of 25 mass% or more and 45 mass% or less.

Detailed Description of the Invention

In a purification step for a tea extract, the tea extract is usually dissolved or dispersed in an appropriate solvent such as ethanol. In the meantime, it has been found that, when the tea extract is dissolved in a high concentration of ethanol, a solubility of the non-polymer catechins decreases.

Therefore, the present invention is to provide a production method for a purified tea extract having improved solubility of the non-polymer catechins in a solvent, and a purified tea extract produced by the production method.

The inventors of the present invention made various studies in view of the above-mentioned problems, and as a result, found that, potassium contained in the tea extract forms a complex with the non-polymer catechins and inhibits dissolution of the non-polymer catechins. Further, the inventors found that, when the tea extract is brought into contact with a cation exchange resin having a specific metal ion as a counterion, a purified tea extract having significantly improved solubility of the non-polymer catechins in a solvent is obtained.

According to the present invention, it is possible to obtain a purified tea extract having improved solubility of the non-polymer catechins in a solvent. In addition, the purified tea extract according to the present invention has improved solubility of the non-polymer catechins in a solvent such as a high concentration of ethanol, and hence is also useful as a raw material for an additional purification step.

First, a production method for a purified tea extract according to the present invention is described.

The production method for a purified tea extract according to the present invention comprises bringing a tea extract into contact with a hydrogen-type (H-type) cation exchange resin wherein the hydrogen ions have been exchanging for magnesium ions or lithium ions.

An example of the "tea extract" to be used in the present invention includes a tea extract solution or a concentrated tea extract solution thereof, and the tea extract may have a variety of forms such as a solid, a liquid, a solution, and a slurry.

The term "tea extract solution" as used herein refers to a product which is obtained by extraction such as kneader extraction or column extraction from tea leaves with hot water or a hydrophilic organic solvent, and is not subjected to a concentration or purification procedure. It should be noted that examples of the hydrophilic organic solvent may include: an alcohol such as methanol or ethanol; and a ketone such as acetone. In addition, the "concentrated tea extract solution" refers to a product obtained by increasing the concentration of the non-polymer catechins through removal of at least a part of the solvent from the tea extract solution, and can be prepared by a method described in, for example, JP-A-59-219384, JP-A-4-20589, JP-A-5-260907, or JP-A-5-306279.

Examples of the tea leaves to be used for the extraction include tea leaves selected from the genus *Camellia,* for example, *C. var. sinensis* (including the Yabukita variety), *C. var. assamica,* and hybrids thereof. The tea leaves can be roughly divided into unfermented tea, semi-fermented tea, and fermented tea, depending on the processing methods.

Examples of the unfermented tea include green tea such as sencha, bancha, gyokuro, tencha, and kamairicha, and kukicha, bocha, mecha, or the like may be used. In addition, examples of the semi-fermented tea include oolong tea such as tekkannon, shikisyu, ogonkei, and buigancha. Further, examples of the fermented tea include black tea such as Darjeeling, Assam, and Sri Lanka. Those teas may be used alone or in combination of two or more kinds thereof. Of those, green tea is preferred from the viewpoint of the content of the non-polymer catechins. The term "non-polymer catechins" as used herein is a collective term for both of non-epi-form catechins such as catechin, gallocatechin, catechin gallate, and gallocatechin gallate and epi-form catechins such as epicatechin, epigallocatechin, epicatechin gallate, and epigallocatechin gallate. The concentration of the non-polymer catechins is defined based on the total amount of the above-mentioned eight kinds of catechins.

In the present invention, as a tea extract solution or a solid of a concentrated tea extract solution, for example, commercially available products such as "POLYPHENON" manufactured by Mitsui Norin Co., Ltd., "TEAFURAN" manufactured by ITO EN, LTD., and "SUNPHENON" manufactured by Taiyo Kagaku Co., Ltd. may be used.

The cation exchange resin to be used in the present invention is a magnesium-type or lithium-type cation exchange resin. The magnesium-type or lithium-type cation exchange resin is prepared by exchanging hydrogen ions of a hydrogen-type (H-type) cation exchange resin for magnesium ions or lithium ions. A conventional method may be employed as a preparation method, and the following method may be employed, for example. In the case of the magnesium-type cation exchange resin, an aqueous solution of magnesium hydroxide or magnesium chloride or the like is brought into contact with the hydrogen-type cation exchange resin. In addition, in the case of the lithium-type cation exchange resin, an aqueous solution of lithium hydroxide or lithium chloride or the like is brought into contact with the hydrogen-type cation exchange resin. Subsequently, after the contact treatment, the resulting cation exchange resin is washed with ion exchange water until the washing water has a non-alkaline pH.

Examples of the resin matrix of the hydrogen-type cation exchange resin to be used for preparation of the magnesium-type or lithium-type cation exchange resin may include a styrene-based resin such as styrene-divinylbenzene, an acrylic acid-based resin, and a methacrylic acid-based resin. In addition, examples of the matrix structure include a gel-type matrix structure and a porous-type matrix structure. Further, examples of a form of the resin may include powdery, spherical, fibrous, and filmy forms. In the present invention, the form of the resins may be appropriately selected and used.

In addition, the hydrogen-type cation exchange resin includes a strongly acidic or weakly acidic cation exchange resin. Of those, from the viewpoints of efficiency of removal of potassium and yield of the non-polymer catechins during ion exchange treatment, a strongly acidic cation exchange resin is preferred. Examples of the strongly acidic cation exchange resin that may be used include DIAION SK1B, SK104, SK110, SK112, SK116, PK208, PK212, PK216, PK218, PK220, and PK228 (each of which is manufactured by Mitsubishi Chemical Corporation), Amberlite IR120B, IR124, 200CT, and 252 (each of which is manufactured by Rohm and Haas), and DOWEX 50Wx2, 50Wx4, and 50Wx8 (each of which is manufactured by The Dow Chemical Company).

In the present invention, the tea extract is brought into contact with the magnesium-type or lithium-type cation exchange resin as prepared above, and potassium ions contained in the tea extract are exchanged for magnesium ions or lithium ions of the cation exchange resin. As a result, the content of potassium significantly decreases, while the content of magnesium or lithium increases, which leads to significant improvement in solubility of the non-polymer catechins in a solvent.

When the tea extract is brought into contact with the cation exchange resin, the pH (20°C) of the tea extract is preferably 2 or more, more preferably 3.5 or more, even more preferably 4 or more, from the viewpoints of efficiency of ion exchange and the content of the non-polymer catechins in solids of a supernatant liquid in elution with ethanol, and is preferably 6 or less, more preferably 5.5 or less, even more preferably 5 or less, from the viewpoint of stability of the non-polymer catechins. The pH falls within the range of preferably from 2 to 6, more preferably from 3.5 to 5.5, even more preferably from 4 to 5.

When the tea extract is brought into contact with the magnesium-type or lithium-type cation exchange resin, the concentration of the non-polymer catechins in the tea extract is preferably 0.1 mass% or more, more preferably 0.25 mass% or more, more preferably 0.5 mass% or more, even more preferably 0.75 mass% or more, and is preferably 10 mass% or less, more preferably 5 mass% or less, even more preferably 3 mass% or less, from the viewpoint of production efficiency. The concentration of the non-polymer catechins falls within the range of preferably from 0.1 to 10 mass%, more preferably from 0.25 to 5 mass%, more preferably from 0.5 to 5 mass%, more preferably from 0.5 to 3 mass%, even more preferably from 0.75 to 3 mass%. It should be noted that the tea extract may be concentrated or diluted, as required, so that the concentration of the non-polymer catechins in the tea extract maybe adjusted within the above-mentioned range.

As a method for the contact of the tea extract with the magnesium-type or lithium-type cation exchange resin, there may be given, for example, a batch mode involving adding the cation exchange resin to the tea extract, stirring the mixture for adsorprion, and collecting the cation exchange resins by filtration, or a column mode involving allowing the tea extract to flow through a column filled with the above-mentioned cation exchange resin to continuously perform adsorption treatment, or the like. The contact conditions may be appropriately adjusted, depending on the contact method. For example, in the case of employing the batch mode, the contact time is preferably 0.1 hour or more, more preferably 0.3 hour or more, more preferably 0.5 hour or more, more preferably 1 hour or more, more preferably 2 hours or more, even more preferably 3 hours or more, from the viewpoint of efficiency of ion exchange, and is preferably 5 hours or less, more preferably 4 hours or less, from the viewpoint of suppression of deterioration of taste and flavor. The contact time falls within the range of preferably from 0.1 to 5 hours, more preferably from 0.3 to 5 hours, more preferably from 0.5 to 5 hours, more preferably from 1 to 5 hours, more preferably from 2 to 5 hours, more preferably from 3 to 5 hours, even more preferably from 3 to 4 hours. In addition, in the case of employing the column mode, the space velocity (SV) is preferably 10/hr or less, more preferably 8/hr or less, and is preferably 0.5/hr or more, more preferably 2/hr or more, even more preferably 5/hr or more. The space velocity (SV) is preferably from 0.5 to 10/hr, more preferably from 2 to 10/hr, more preferably from 5 to 10/hr, even more preferably from 5 to 8/hr.

The contact temperature of the tea extract and the magnesium-type or lithium-type cation exchange resin is preferably 0°C or more, more preferably 10°C or more, even more preferably 20°C or more, and is preferably 40°C or less, more preferably 35°C or less, even more preferably 30°C or less, regardless of the contact method. The contact temperature falls within the range of preferably from 0 to 40°C, more preferably from 10 to 35°C, even more preferably from 20 to 30°C.

The amount of the magnesium-type or lithium-type cation exchange resin used may be appropriately adjusted depending on the contact method, and from the viewpoint of the efficiency of removal of potassium, for example, the volume ratio (v/v) of tea extract/cation exchange resin is preferably 1 or more, more preferably 5 or more, even more preferably 10 or more, and is preferably 200 or less, more preferably 150 or less, more preferably 100 or less, more preferably 80 or less, more preferably 60 or less, more preferably 40 or less, even more preferably 30 or less. The volume ratio (v/v) is preferably from 1 to 200, more preferably from 5 to 150, more preferably from 10 to 100, more preferably from 10 to 80, more preferably from 10 to 60, more preferably from 10 to 40, even more preferably from 10 to 30.

The cation exchange resin after the contact treatment may be reused repeatedly by regenerating the resin into a magnesium-type or lithium-type cation exchange resin by the method as mentioned above.

A product form of the purified tea extract-thus obtained according to the present invention may be a liquid or a solid. If the solid is desirable, the purified tea extract may be powderized by a conventional method such as spray-drying or freeze-drying.

In addition, the purified tea extract according to the present invention may have the following characteristics.

(i) From the viewpoint of improvement in solubility of the non-polymer catechins, the mass ratio of (magnesium+lithium)/non-polymer catechins is 0.1 or more, preferably 0.13 or more, more preferably 0.15 or more. It should be noted that the upper limit is not particularly limited, but from the viewpoint of production efficiency, the upper limit is preferably 1, more preferably 0.6, even more preferably 0.4. The mass ratio falls within the range of preferably from 0.1 to 1, more preferably from 0.13 to 0.6, even more preferably from 0.15 to 0.4.

(ii) From the viewpoint of improvement in solubility of the non-polymer catechins, the total content of magnesium and lithium in solids is preferably 3 mass% or more, more preferably 4 mass% or more, even more preferably 5 mass% or more, and is preferably 30 mass% or less, more preferably 20 mass% or less, even more preferably 10 mass% or less. The total content falls within the range of preferably from 3 to 30 mass%, more preferably from 4 to 20 mass%, even more preferably from 5 to 10 mass%.

(iii) From the viewpoint of improvement in solubility of the non-polymer catechins, the mass ratio of potassium/non-polymer catechins is 0.26 or less, more preferably 0.24 or less, even more preferably 0.22 or less. It should be noted that the lower limit is not particularly limited, but from the viewpoint of production efficiency, the lower limit is preferably 0.01, more preferably 0.05, even more preferably 0.1. The mass ratio falls within the range of preferably from 0.01 to 0.26, more preferably from 0.05 to 0.24, even more preferably from 0.1 to 0.22.

(iv) From the viewpoint of improvement in solubility of the non-polymer catechins, the content of potassium in solids is preferably 8.5 mass% or less, more preferably 8 mass% or less, even more preferably 7 mass% or less, and is preferably 2 mass% or more, more preferably 3 mass% or more, even more preferably 4 mass% or more. The content falls within the range of preferably from 2 to 8.5 mass%, more preferably from 3 to 8 mass%, even more preferably from 4 to 7 mass%.

(v) From the viewpoint of a physiological effect, the content of the non-polymer catechins in solids is 25 mass% or more, preferably 28 mass% or more, more preferably 30 mass% or more, and is 45 mass% or less, preferably 44 mass% or less, more preferably 43 mass% or less. The content falls within the range of from 25 to 45 mass%, preferably from 28 to 44 mass%, more preferably from 30 to 43 mass%.

(vi) The elution ratio of the non-polymer catechins in ethanol calculated by the formula (1) to be described later is preferably from 92 to 100%, more preferably from 92.5 to 100%, even more preferably from 93 to 100%.

(vii) The pH (20°C) of an aqueous solution obtained by diluting the purified tea extract with distilled water so that the concentration of the non-polymer catechins becomes 1 mass% is preferably 3 or more, more preferably 4 or more, even more preferably 4.5 or more, and is preferably 7 or less, more preferably 6.5 or less, even more preferably 6 or less. The pH falls within the range of preferably from 3 to 7, more preferably from 4 to 6.5, even more preferably from 4.5 to 6.

In the present description, the contents of the "non-polymer catechins" and "magnesium, lithium, potassium" are measured in accordance with the method described in Examples below. In addition, the term "solids" or "dry solids" as used herein refers to a residue obtained by drying a sample with an electric thermostat dryer at 105°C for 3 hours to remove volatile components therefrom.

In addition, the purified green tea extract of the present has improved solubility of the non-polymer catechins in various solvents including ethanol at a high concentration, and hence may be used as a raw material for an additional purification step. That is, the purified green tea extract according to the present invention obtained by bringing a tea extract into contact with the magnesium-type or lithium-type cation exchange resin may be brought into contact with an aqueous solution of an organic solvent to further produce a purified tea extract. In addition, a preferred example of the organic solvent is ethanol, and a preferred concentration of the organic solvent in the aqueous solution of the organic solvent is 75 mass% or more, preferably 80 mass% or more, more preferably 85 mass% or more, even more preferably 90 mass% or more, and is 100 mass% or less, more preferably 99.5 mass% or less, even more preferably 95 mass% or less.

That is, in regard to the above-mentioned embodiments, the present invention further discloses the following production method for a purified tea extract or purified tea extract.

<1-1>

A production method for a purified tea extract, comprising bringing a tea extract into contact with a hydrogen-type (H-type) cation exchange resin wherein the hydrogen ions have been exchanging for magnesium ions or lithium ions.

<1-2>

The production method for a purified tea extract according to the above-mentioned item <1-1>, in which the cation exchange resin is preferably a strongly acidic ion exchange resin.

<1-3>

The production method for a purified tea extract according to the above-mentioned item <1-1> or <1-2>, in which, when the tea extract is brought into contact with the cation exchange resin, the pH of the tea extract is preferably 2 or more, more preferably 3.5 or more, even more preferably 4 or more, and is preferably 6 or less, more preferably 5.5 or less, even more preferably 5 or less.

<1-4>

The production method for a purified tea extract according to any one of the above-mentioned items <1-1> to <1-3>, in which, when the tea extract is brought into contact with the cation exchange resin, the pH of the tea extract is preferably from 2 to 6, more preferably from 3.5 to 5.5, even more preferably from 4 to 5.

<1-5>

The production method for a purified tea extract according to any one of the above-mentioned items <1-1> to <1-4>, in which a concentration of the non-polymer catechins in the tea extract is preferably 0.1 mass% or more, more preferably 0.25 mass% or more, more preferably 0.5 mass% or more, more preferably 0.75 mass% or more, even more preferably 1 mass% or more, and is preferably 10 mass% or less, more preferably 5 mass% or less, even more preferably 3 mass% or less.

<1-6>

The production method for a purified tea extract according to any one of the above-mentioned items <1-1> to <1-5>, in which the concentration of the non-polymer catechins in the tea extract is preferably from 0.1 to 10 mass%, more preferably from 0.25 to 5 mass%, more preferably from 0.5 to 5 mass%, more preferably from 0.5 to 3 mass%, more preferably from 0.75 to 3 mass%, even more preferably from 1 to 3 mass%.

<1-7>

The production method for a purified tea extract according to any one of the above-mentioned items <1-1> to <1-6>, in which an amount of the cation exchange resin used is preferably 1 or more, more preferably 5 or more, even more preferably 10 or more, and is preferably 200 or less, more preferably 150 or less, more preferably 100 or less, more preferably 80 or less, more preferably 60 or less, more preferably 40 or less, even more preferably 30 or less, in terms of volume ratio of tea extract/cation exchange resin.

<1-8>

The production method for a purified tea extract according to any one of the above-mentioned items <1-1> to <1-7>, in which the amount of the cation exchange resin used is preferably from 1 to 200, more preferably from 5 to 150, more preferably from 10 to 100, more preferably from 10 to 80, more preferably from 10 to 60, more preferably from 10 to 40, even more preferably from 10 to 30, in terms of volume ratio of tea extract/cation exchange resin.

<1-9>

The production method for a purified tea extract according to any one of the above-mentioned items <1-1> to <1-8>, in which the cation exchange resin comprises, as a matrix, a styrene-based resin, an acrylic acid-based resin, or a methacrylic acid-based resin.

<1-10>

The production method for a purified tea extract according to any one of the above-mentioned items <1-1> to <1-9>, in which the cation exchange resin is preferably a gel-type or porous-type cation exchange resin.

<1-11>

The production method for a purified tea extract according to any one of the above-mentioned items <1-1> to <1-10>, in which the tea extract is brought into contact with the cation exchange resin at a temperature of preferably 0°C or more, more preferably 10°C or more, even more preferably 20°C or more, and of preferably 40°C or less, more preferably 35°C or less, even more preferably 30°C or less.

<1-12>

The production method for a purified tea extract according to any one of the above-mentioned items <1-1> to <1-11>, in which the tea extract is brought into contact with the cation exchange resin at a temperature of preferably from 0 to 40°C, more preferably from 10 to 35°C, even more preferably from 20 to 30°C.

<1-13>

The production method for a purified tea extract according to any one of the above-mentioned items <1-1> to <1-12>, in which the tea extract is preferably brought into contact with the cation exchange resin in a batch mode.

<1-14>

The production method for a purified tea extract according to the above-mentioned item <1-13>, in which the tea extract is brought into contact with the cation exchange resin in the batch mode for preferably 0.1 hour or more, more preferably 0.3 hour or more, more preferably 0.5 hour or more, more preferably 1 hour or more, more preferably 2 hours or more, even more preferably 3 hours or more, and for preferably 5 hours or less, more preferably 4 hours or less.

<1-15>

The production method for a purified tea extract according to the above-mentioned item <1-13> or <1-14>, in which the tea extract is brought into contact with the cation exchange resin in the batch mode for preferably from 0.1 to 5 hours, more preferably from 0.3 to 5 hours, more preferably from 0.5 to 5 hours, more preferably from 1 to 5 hours, more preferably from 2 to 5 hours, more preferably from 3 to 5 hours, even more preferably from 3 to 4 hours.

<1-16>

The production method for a purified tea extract according to any one of the above-mentioned items <1-1> to <1-12>, in which the tea extract is preferably brought into contact with the cation exchange resin in a column mode.

<1-17>

The production method for a purified tea extract according to the above-mentioned item <1-16>, in which the tea extract is brought into contact with the cation exchange resin in the column mode at a space velocity of preferably 10/hr or less, more preferably 8/hr or less, and of preferably 0.5/hr or more, more preferably 2/hr or more, even more preferably 5/hr or more.

<1-18>

The production method for a purified tea extract according to the above-mentioned item <1-16> or <1-17>, in which the tea extract is brought into contact with the cation exchange resin in the column mode at a space velocity of preferably from 0.5 to 10/hr, more preferably from 2 to 10/hr, more preferably from 5 to 10/hr, even more preferably from 5 to 8/hr.

<1-19>

The production method for a purified tea extract according to any one of the above-mentioned items <1-1> to <1-18>, in which the tea extract is a green tea extract.

<2-1>

A purified tea extract obtainable by the above production method and having a mass ratio of (magnesium+lithium) /non-polymer catechins of 0.1 or more, a mass ratio of potassium/non-polymer catechins of 0.26 or less, and a content of non-polymer catechins in a residue obtained by drying a sample with an electric thermostat dryer at 105°C for 3 hour of 25 mass% or more and 45 mass% or less.

<2-2>

The purified tea extract according to the above-mentioned item <2-1>, in which the mass ratio of (magnesium+lithium)/non-polymer catechins is preferably 0.13 or more, more preferably 0.15 or more, and is preferably 1 or less, more preferably 0.6 or less, even more preferably 0.4 or less.

<2-3>

The purified tea extract according to the above-mentioned item <2-1>, in which the mass ratio of (magnesium+lithium)/non-polymer catechins is preferably from 0.1 to 1, more preferably from 0.13 to 0.6, even more preferably from 0.15 to 0.4.

<2-4>

The purified tea extract according to any one of the above-mentioned items <2-1> to <2-3>, in which a total content of magnesium and lithium in a residue obtained by drying a sample with an electric thermostat dryer at 105°C for 3 hour is 3 mass% or more, preferably 4 mass% or more, even more preferably 5 mass% or more, and is 30 mass% or less, preferably 20 mass% or less, more preferably 10 mass% or less.

<2-5>

The purified tea extract according to any one of the above-mentioned items <2-1> to <2-4>, in which the total content of magnesium and lithium in a residue obtained by drying a sample with an electric thermostat dryer at 105°C for 3 hour is preferably from 3 to 30 mass%, more preferably from 4 to 20 mass%, even more preferably from 5 to 10 mass%.

<2-6>

The purified tea extract according to any one of the above-mentioned items <2-1> to <2-5>, in which a content of potassium in a residue obtained by drying a sample with an electric thermostat dryer at 105°C for 3 hour is preferably 8.5 mass% or less, more preferably 8 mass% or less, even more preferably 7 mass% or less, and is preferably 2 mass% or more, more preferably 3 mass% or more, even more preferably 4 mass% or more.

<2-7>

The purified tea extract according to any one of the above-mentioned items <2-1> to <2-6>, in which the content of potassium in a residue obtained by drying a sample with an electric thermostat dryer at 105°C for 3 hour is preferably from 2 to 8.5 mass%, more preferably from 3 to 8 mass%, even more preferably from 4 to 7 mass%.

<2-8>

The purified tea extract according to any one of the above-mentioned items <2-1> to <2-7>, in which a content of the non-polymer catechins in a residue obtained by drying a sample with an electric thermostat dryer at 105°C for 3 hour is 25 mass% or more, preferably 28 mass% or more, even more preferably 30 mass% or more, and is 45 mass% or less, preferably 44 mass% or less, more preferably 43 mass% or less.

<2-9>

The purified tea extract according to any one of the above-mentioned items <2-1> to <2-8>, in which the content of the non-polymer catechins in a residue obtained by drying a sample with an electric thermostat dryer at 105°C for 3 hour is from 25 to 45 mass%, preferably from 28 to 44 mass%, even more preferably from 30 to 43 mass%.

<2-10>

The purified tea extract according to any one of the above-mentioned items <2-1> to <2-9>, in which a mass ratio of potassium/non-polymer catechins is 0.26 or less, preferably 0.24 or less, more preferably 0.22 or less, and is preferably 0.01 or more, more preferably 0.05 or more, even more preferably 0.1 or more.

<2-11>

The purified tea extract according to any one of the above-mentioned items <2-1> to <2-10>, in which the mass ratio of potassium/non-polymer catechins is preferably from 0.01 to 0.26, more preferably from 0.05 to 0.24, even more preferably from 0.1 to 0.22.

<2-12>

The purified tea extract according to any one of the above-mentioned items <2-1> to <2-11>, in which an elution rate of the non-polymer catechins in ethanol, which is calculated by the formula (1) to be described later, is preferably from 92 to 100%, more preferably from 92.5 to 100%, even more preferably from 93 to 100%.

<2-13>

The purified tea extract according to any one of the above-mentioned items <2-1> to <2-12>, in which the pH of an aqueous solution obtained by diluting with distilled water so that the concentration of the non-polymer catechins becomes 1 mass% is preferably 3 or more, more preferably 4 or more, even more preferably 4.5 or more, and is preferably 7 or less, more preferably 6.5 or less, even more preferably 6 or less.

<2-14>

The purified tea extract according to any one of the above-mentioned items <2-1> to <2-13>, in which the pH of an aqueous solution obtained by diluting with distilled water so that the concentration of the non-polymer catechins becomes 1 mass% is preferably from 3 to 7, more preferably from 4 to 6.5, even more preferably from 4.5 to 6.

Examples

1. Measurement of non-polymer catechins

A tea extract, tea extract 1, tea extract solutions 1 to 3, and purified tea extracts 1 to 16 were each appropriately diluted with distilled water, filtered with a filter (0.45 μm), and analyzed by a gradient method using a high-performance liquid chromatograph (type SCL-10AVP, manufactured by Shimadzu Corporation) equipped with an octadecyl group-introduced packed column for liquid chromatography (L-column TM ODS, 4.6 mmφ×250 mm: manufactured by Chemicals Evaluation and Research Institute, Japan) at a column temperature of 35°C. Determination was carried out by a calibration curve method using standards of catechins manufactured by Mitsui Norin Co., Ltd. The determination was carried out under conditions of using a solution of 0.1 mol/L acetic acid in distilled water as a mobile phase solution A and a solution of 0.1 mol/L acetic acid in acetonitrile as a mobile phase solution B at a sample injection volume of 20 μL and a UV detector wavelength of 280 nm.

2. Measurement of metal ions

The tea extract, tea extract 1, tea extract solutions 1 to 3, and purified tea extracts 1 to 16 were each appropriately diluted with distilled water, filtered with a filter (0.45 μm), and loaded to a capillary electrophoresis apparatus Capi3000 (Otsuka Electronics Co., Ltd.). The concentrations of the respective metal ions were calculated in terms of chlorides.

Electrophoresis solution: 10 mM imidazole, 5 mM 2-hydroxyisobutyric acid, 2 mM 18 crown-6-ether, 0.2 wt% acetic acid
Detection: indirect UV method, UV detector wavelength: 210 nm

3. Measurement of pH

The tea extract, tea extract 1, tea extract solutions 1 to 3, and purified tea extracts 1 to 16 were each diluted with distilled water so that the concentration of the non-polymer catechins was 1 mass%, and the pH (20°C) of each of the resultant solutions was measured.

4. Test of dissolution of non-polymer catechins in ethanol

1.0 g of each of the tea extract 1 and purified tea extracts 1 to 16 was taken, and 0.063 g of a filter aid (Solka Flock, Kurita Water Industries Ltd.), 0.5 g of acid clay (MIZUKA ACE #600, manufactured by MIZUSAWA INDUSTRIAL CHEMICALS, LTD.), and 4.0 g of 92.4 mass% ethanol were added thereto, followed by mixing at 25°C for 6 hours . The mixture was allowed to stand still to separate the slurry, and the supernatant was treated with a 0.2 μm filter, followed by collection of the supernatant liquid. The content of the non-polymer catechins and dry solids in the supernatant liquid were measured.

Elution ratio of non-polymer catechins in ethanol The elution ratio was calculated by the following formula (1) .

Elution ratio of non-polymer catechins in ethanol=(amount of non-polymer catechins in supernatant liquid)/(amount of non-polymer catechins in tea extract)×100···(1)

Production Example 1

Production of cation exchange resin

1) Production of magnesium-type cation exchange resin

10 g of a strongly acidic cation exchange resin (H-type, SK1BH, manufactured by Mitsubishi Chemical Corporation) was taken and stirred in 400 g of ion exchange water containing 20 g of magnesium hydroxide for 40 hours. Subsequently, the resin was collected by filtration and washed three times with 1,200 g of ion exchange water, thereby producing a magnesium-type (Mg-type) cation exchange resin.

2) Production of lithium-type cation exchange resin

10 g of a strongly acidic cation exchange resin (H-type, SK1BH, manufactured by Mitsubishi Chemical Corporation) was taken and stirred in 500 g of 2 M lithium hydroxide for 1 hour. The stirring procedure was repeated three times. Subsequently, the resin was collected by filtration and washed three times with 1,200 g of ion exchange water, thereby producing a lithium-type (Li-type) cation exchange resin.

3) Production of potassium-type cation exchange resin

A potassium-type (K-type) cation exchange resin was produced in the same manner as the Li-type cation exchange resin except that 2 M potassium hydroxide was used.

4) Production of sodium-type cation exchange resin

A sodium-type (Na-type) cation exchange resin was produced in the same manner as the Li-type cation exchange resin except that 2 M sodium hydroxide was used.

Production Example 2

Preparation of tea extract solution 1

3.23 g of the tea extract (non-polymer catechins: 32.9 mass%) was taken and dissolved in 967.7 g of ion exchange water, thereby preparing the tea extract solution 1 containing 1.0 mass% of the non-polymer catechins.

Production Example 3

Preparation of tea extract solution 2

64.6 g of the tea extract (non-polymer catechins : 32.9 mass%) was taken and dissolved in 935.4 g of ion exchange water, thereby preparing the tea extract solution 2 containing 2.0 mass% of the non-polymer catechins.

Production Example 4

Preparation of tea extract solution 3

96.9 g of the tea extract (non-polymer catechins : 32.9 mass%) was taken and dissolved in 903.1 g of ion exchange water, thereby preparing the tea extract solution 3 containing 3.0 mass% of the non-polymer catechins.

Example 1

5.0 g (6.2 mL) of the Mg-type cation exchange resin was added to 107.0 g of the tea extract solution 1 (non-polymer catechins: 1.0 mass%), mixed at 25°C for 4 hours, and collected by filtration, thereby obtaining 103.8 g of a purified tea extract solution 1 (non-polymer catechins: 0.95 mass%). After that, the solution was freeze-dried, thereby obtaining 3.0 g of the purified tea extract 1 (non-polymer catechins: 32.4 mass%). Table 1 shows the analysis results of the purified tea extract 1 and the elution ratio of the non-polymer catechins in 92.4 mass% of ethanol.

Example 2

7.2 g of the purified tea extract 2 (non-polymer catechins: 32.8 mass%) was obtained in the same manner as in Example 1 except that 5.0 g (6.2 mL) of the Mg-type cation exchange resin was added to 250.1 g of the tea extract solution 1 (non-polymer catechins: 1.0 mass%). Table 1 shows the analysis results of the purified tea extract 2 and the elution ratio of the non-polymer catechins in 92.4 mass% of ethanol.

Example 3

14.7 g of the purified tea extract 3 (non-polymer catechins: 32.3 mass%) was obtained in the same manner as in Example 1 except that 5.0 g (6.2 mL) of the Mg-type cation exchange resin was added to 500.0 g of the tea extract solution 1 (non-polymer catechins: 1.0 mass%). Table 1 shows the analysis results of the purified tea extract 3 and the elution ratio of the non-polymer catechins in 92.4 mass% of ethanol.

Example 4

7.0 g of the purified tea extract 4 (non-polymer catechins: 31.4 mass%) was obtained in the same manner as in Example 2 except that the Li-type cation exchange resin was used. Table 1 shows the analysis results of the purified tea extract 4 and the elution ratio of the non-polymer catechins in 92.4 mass% of ethanol.

Comparative Example 1

107.0 g of the tea extract solution 1 (non-polymer catechins: 1.0 mass%) was freeze-dried, thereby obtaining 3.0 g of the tea extract 1 (non-polymer catechins: 31.9 mass%). Table 1 shows the analysis results of the tea extract 1 and the elution ratio of the non-polymer catechins in 92.4 mass% of ethanol.

Comparative Example 2

7.2 g of the purified tea extract 5 (non-polymer catechins: 31.5 mass%) was obtained in the same manner as in Example 1 except that 5.0 g (6.2 mL) of the Na-type cation exchange resin was added to 250.1 g of the tea extract solution 1 (non-polymer catechins: 1.0 mass%). Table 1 shows the analysis results of the purified tea extract 5 and the elution ratio of the non-polymer catechins in 92.4 mass% of ethanol.

Comparative Example 3

7.2 g of the purified tea extract 6 (non-polymer catechins: 30.9 mass%) was obtained in the same manner as in Example 1 except that 5.0 g (6.2 mL) of the K-type cation exchange resin was added to 250.1 g of the tea extract solution 1 (non-polymer catechins: 1.0 mass%). Table 1 shows the analysis results of the purified tea extract 6 and the elution ratio of the non-polymer catechins in 92.4 mass% of ethanol.

[Table 1]

| | | | Example | Example | Example | Example | Comparative Example | Comparative Example | Comparative Example |
|---|---|---|---|---|---|---|---|---|---|
| | | | 1 | 2 | 3 | 4 | 1 | 2 | 3 |
| | | | Mg-type | Mg-type | Mg-type | Li-type | - | Na-type | K-type |
| Contact step | Raw material tea extract | Form | Extract solution 1 | Extract solution 1 | Extract solution 1 | Extract solution 1 | Extract solution 1 | Extract solution 1 | Extract solution 1 |
| | Amount of extract solution/amount of resin | [V/V] | 17 | 40 | 80 | 40 | - | 40 | 40 |
| | Exchanging ion | - | Mg | Mg | Mg | Li | - | Na | K |
| | Resin | - | Strongly acidic | Strongly acidic | Strongly acidic | Strongly acidic | - | Strongly acidic | Strongly acidic |
| Purified tea extract after contact treatment | | Form | Liquid | Liquid | Liquid | Liquid | Liquid | Liquid | Liquid |
| | Non-polymer catechins | [Mass%] | 0.949 | 0.964 | 0.968 | 0.969 | 0.999 | 0.988 | 0.964 |
| | Potassium | [Mass%] | 0.13 | 0.18 | 0.21 | 0.13 | 0.27 | 0.19 | 0.39 |
| | Magnesium | [Mass%] | 0.27 | 0.21 | 0.17 | 0.01 | 0.09 | 0.01 | 0.01 |
| | Lithium | [Mass%] | 0 | 0 | 0 | 0.21 | 0 | 0 | 0 |
| | Sodium | [Mass%] | 0.01 | 0.01 | 0.01 | 0 | 0.01 | 0.18 | 0.01 |
| | pH (20°C) | | 5.4 | 5.4 | 5.4 | 5.4 | 5.4 | 5.4 | 5.4 |

(continued)

| | | | Example | Example | Example | Example | Comparative Example | Comparative Example | Comparative Example |
|---|---|---|---|---|---|---|---|---|---|
| | | | 1 | 2 | 3 | 4 | 1 | 2 | 3 |
| | | | Mg-type | Mg-type | Mg-type | Li-type | - | Na-type | K-type |
| Purified tea extract after pulverization | | | Purified tea extract 1 | Purified tea extract 2 | Purified tea extract 3 | Purified tea extract 4 | Tea extract 1 | Purified tea extract 5 | Purified tea extract 6 |
| | | Form | Solid | Solid | Solid | Solid | Solid | Solid | Solid |
| | Non-polymer catechins in solids | [Mass%] | 32.4 | 32.8 | 32.3 | 31.4 | 31.9 | 31.5 | 30.9 |
| | Potassium in solids | [Mass%] | 4.4 | 6.0 | 6.9 | 4.2 | 8.6 | 6.0 | 12.6 |
| | Magnesium in solids | [Mass%] | 9.3 | 7.1 | 5.5 | 0.3 | 2.7 | 0.3 | 0.4 |
| | Lithium in solids | [Mass%] | 0 | 0 | 0 | 6.8 | 0 | 0 | 0 |
| | Sodium in solids | [Mass%] | 0.3 | 0.4 | 0.3 | 0.1 | 0.4 | 5.7 | 0.3 |
| | Maqnesium/non-polymer catechins | Mass ratio | 0.286 | 0.215 | 0.172 | 0.008 | 0.086 | 0.008 | 0.012 |
| | Lithium/non-polymer catechins | Mass ratio | 0 | 0 | 0 | 0.215 | 0 | 0 | 0 |
| | Potassium/non-polymer catechins | Mass ratio | 0.136 | 0.183 | 0.214 | 0.134 | 0.270 | 0.191 | 0.408 |
| Elution ratio of non-polymer catechins | | [%] | 96.9 | 93.8 | 94.6 | 100 | 89.8 | 91.4 | 88.5 |

Example 5

3.0 g of the purified tea extract 7 (non-polymer catechins: 32.5 mass%) was obtained in the same manner as in Example 1 except that the Li-type cation exchange resin was used. Table 2 shows the analysis results of the purified tea extract 7 and the elution ratio of the non-polymer catechins in 92.4 mass% of ethanol.

Example 6

11.8 g of the purified tea extract 8 (non-polymer catechins: 33.2 mass%) was obtained in the same manner as in Example 5 except that 375.0 g of the tea extract was brought into contact with the Li-type cation exchange resin. Table 2 shows the analysis results of the purified tea extract 8 and the elution ratio of the non-polymer catechins in 92.4 mass% of ethanol.

Example 7

13.8 g of the purified tea extract 9 (non-polymer catechins: 32.8 mass%) was obtained in the same manner as in Example 5 except that 437.5 g of the tea extract was brought into contact with the Li-type cation exchange resin. Table 2 shows the analysis results of the purified tea extract 9 and the elution ratio of the non-polymer catechins in 92.4 mass% of ethanol.

[Table 2]

| | | | Example 5 | Example 6 | Example 7 |
|---|---|---|---|---|---|
| | | | Li-type | Li-type | Li-type |
| Contact step | Raw material tea extract | Form | Extract solution 1 | Extract solution 1 | Extract solution 1 |
| | Amount of extract solution/ amount of resin | [V/V] | 17 | 60 | 70 |
| | Exchanging ion | - | Li | Li | Li |
| | Resin | - | Strongly acidic | Strongly acidic | Strongly acidic |
| Purified tea extract after contact treatment | | Form | Liquid | Liquid | Liquid |
| | Non-polymer catechins | [Mass%] | 0.925 | 0.969 | 0.973 |
| | Potassium | [Mass%] | 0.04 | 0.14 | 0.15 |
| | Magnesium | [Mass%] | 0 | 0.01 | 0.01 |
| | Lithium | [Mass%] | 0.19 | 0.10 | 0.09 |
| | Sodium | [Mass%] | 0 | 0.01 | 0.01 |
| | pH (20°C) | | 5.4 | 5.4 | 5.4 |

(continued)

| | | | Example 5 Li-type | Example 6 Li-type | Example 7 Li-type |
|---|---|---|---|---|---|
| Purified tea extract after pulverization | | | Purified tea extract 7 | Purified tea extract 8 | Purified tea extract 9 |
| | | Form | Solid | Solid | Solid |
| | Non-polymer catechins in solids | [Mass%] | 32.5 | 33.2 | 32.8 |
| | Potassium in solids | [Mass%] | 1.3 | 4.8 | 5.2 |
| | Magnesium in solids | [Mass%] | 0 | 0.2 | 0.3 |
| | Lithium in solids | [Mass%] | 6.1 | 3.6 | 3.1 |
| | Sodium in solids | [Mass%] | 0.1 | 0.4 | 0.4 |
| | Magnesium/non-polymer catechins | Mass ratio | 0 | 0.007 | 0.008 |
| | Lithium/non-polymer catechins | Mass ratio | 0.187 | 0.108 | 0.093 |
| | Potassium/non-polymer catechins | Mass ratio | 0.040 | 0.145 | 0.157 |
| Elution ratio of non-polymer catechins | | [%] | 98.1 | 94.3 | 92.4 |

Tables 1 and 2 show that, when the tea extract is brought into contact with the magnesium-type or lithium-type cation exchange resin, the purified tea extracts having enhanced solubility of the non-polymer catechins in the solvent can be obtained.

Example 8

7.0 g of the purified tea extract 10 (non-polymer catechins: 32.1 mass%) was obtained in the same manner as in Example 2 except that hydrochloric acid was added to the tea extract solution 1 to adjust the pH to 5.0. Table 3 shows the analysis results of the purified tea extract 10 and the elution ratio of the non-polymer catechins in 92.4 mass% of ethanol.

Example 9

7.0 g of the purified tea extract 11 (non-polymer catechins: 32.3 mass%) was obtained in the same manner as in Example 8 except that hydrochloric acid was added to adjust the pH to 4.0. Table 3 shows the analysis results of the purified tea extract 11 and the elution ratio of the non-polymer catechins in 92.4 mass% of ethanol.

Example 10

7.1 g of the purified tea extract 12 (non-polymer catechins: 31.7 mass%) was obtained in the same manner as in Example 8 except that hydrochloric acid was added to adjust the pH to 3.0. Table 3 shows the analysis results of the purified tea extract 12 and the elution ratio of the non-polymer catechins in 92.4 mass% of ethanol.

Example 11

7.2 g of the purified tea extract 13 (non-polymer catechins: 30.6 mass%) was obtained in the same manner as in Example 8 except that hydrochloric acid was added to adjust the pH to 2.0. Table 3 shows the analysis results of the purified tea extract 13 and the elution ratio of the non-polymer catechins in 92.4 mass% of ethanol.

[Table 3]

| | | | Example 8 Mg-type | Example 9 Mg-type | Example 10 Mg-type | Example 11 Mg-type |
|---|---|---|---|---|---|---|
| Contact step | Raw material tea extract | Form | Extract solution 1 | Extract solution 1 | Extract solution 1 | Extract solution 1 |
| | Amount of extract solution/amount of resin | [V/V] | 40 | 40 | 40 | 40 |
| | Exchanging ion | - | Mg | Mg | Mg | Mg |
| | Resin | - | Strongly acidic | Strongly acidic | Strongly acidic | Strongly acidic |
| | pH of raw material tea extract before contact treatment | - | 5.0 | 4.0 | 3.0 | 2.0 |
| Purified tea extract after contact treatment | | Form | Liquid | Liquid | Liquid | Liquid |
| | Non-polymer catechins | [Mass%] | 0.924 | 0.900 | 0.869 | 0.862 |
| | Potassium | [Mass%] | 0.17 | 0.17 | 0.18 | 0.17 |
| | Magnesium | [Mass%] | 0.19 | 0.19 | 0.19 | 0.19 |
| | Lithium | [Mass%] | 0 | 0 | 0 | 0 |
| | Sodium | [Mass%] | 0 | 0 | 0 | 0 |
| | pH (20°C) | - | 5.0 | 4.0 | 3.0 | 2.0 |
| Purified tea extract after pulverization | | | Purified tea extract 10 | Purified tea extract 11 | Purified tea extract 12 | Purified tea extract 13 |
| | | Form | Solid | Solid | Solid | Solid |
| | Non-polymer catechins in solids | [Mass%] | 32.1 | 32.3 | 31.7 | 30.6 |
| | Potassium in solids | [Mass%] | 5.9 | 6.2 | 6.2 | 6.3 |
| | Magnesium in solids | [Mass%] | 6.8 | 6.9 | 6.6 | 6.9 |
| | Lithium in solids | [Mass%] | 0 | 0 | 0 | 0 |
| | Sodium in solids | [Mass%] | 0 | 0 | 0 | 0 |
| | Magnesium/non-polymer catechins | Mass ratio | 0.212 | 0.212 | 0.207 | 0.227 |
| | Lithium/non-polymer catechins | Mass ratio | 0 | 0 | 0 | 0 |
| | Potassium/non-polymer catechins | Mass ratio | 0.184 | 0.192 | 0.196 | 0.207 |
| Elution ratio of non-polymer catechins | | [%] | 97.3 | 98.4 | 98.3 | 96.1 |

Table 3 shows that, if the tea extract has a pH of from 2 to 6 when brought into contact with the cation exchange resin, the solubility of the non-polymer catechins in the solvent can be enhanced.

Example 12

5.8 g of the purified tea extract 14 (non-polymer catechins: 33.0 mass%) was obtained in the same manner as in Example 1 except that the tea extract solution 2 was used. Table 4 shows the analysis results of the purified tea extract 14 and the elution ratio of the non-polymer catechins in 92.4 mass% of ethanol.

Example 13

8.8 g of the purified tea extract 15 (non-polymer catechins: 32.4 mass%) was obtained in the same manner as in Example 1 except that the tea extract solution 3 was used. Table 4 shows the analysis results of the purified tea extract 15 and the elution ratio of the non-polymer catechins in 92.4 mass% of ethanol.

[Table 4]

| | | | Example 12 Mg-type | Example 13 Mg-type |
|---|---|---|---|---|
| Contact step | Raw material tea extract | Form | Extract solution 2 | Extract solution 3 |
| | Amount of extract solution/ amount of resin | [V/V] | 17 | 17 |
| | Exchanging ion | - | Mg | Mg |
| | Resin | - | Strongly acidic | Strongly acidic |
| Purified tea extract after contact treatment | | Form | Liquid | Liquid |
| | Non-polymer catechins | [Mass%] | 1.981 | 2.947 |
| | Potassium | [Mass%] | 0.31 | 0.50 |
| | Magnesium | [Mass%] | 0.28 | 0.40 |
| | Lithium | [Mass%] | 0 | 0 |
| | Sodium | [Mass%] | 0.01 | 0.01 |
| | pH (20°C) | | 5.4 | 5.4 |
| Purified tea extract after pulverization | | | Purified tea extract 14 | Purified tea extract 15 |
| | | Form | Solid | Solid |
| | Non-polymer catechins in solids | [Mass%] | 33.0 | 32.4 |
| | Potassium in solids | [Mass%] | 5.1 | 5.5 |
| | Magnesium in solids | [Mass%] | 4.7 | 4.4 |
| | Lithium in solids | [Mass%] | 0 | 0 |
| | Sodium in solids | [Mass%] | 0.1 | 0.1 |
| | Magnesium/non-polymer catechins | Mass ratio | 0.144 | 0.134 |
| | Lithium/non-polymer catechins | Mass ratio | 0 | 0 |
| | Potassium/non-polymer catechins | Mass ratio | 0.154 | 0.170 |
| Elution ratio of non-polymer catechins | | [%] | 93.5 | 95.3 |

Table 4 shows that, even if the non-polymer catechins in the tea extract when the tea extract is brought into contact with the cation exchange resin is highly concentrated, the purified tea extracts having high solubility in the solvent can be obtained.

Example 14

16,656.9 g of the tea extract solution 1 (non-polymer catechins: 1.0 mass%) was allowed to pass through a column filled with 271.0 g (336.1 mL) of the Mg-type cation exchange resin at a flow rate of 43.1 mL/min (SV=7.7/Hr) to collect 16,504.7 g (non-polymer catechins: 0.985 mass%) of a purified tea extract solution 16. The resultant purified tea extract solution 16 was freeze-dried, thereby obtaining 480.0 g of the purified tea extract 16 (non-polymer catechins: 32.9mass%). Table 5 shows the analysis results of the purified tea extract 16 and the elution ratio of the non-polymer catechins in 92.4 mass% of ethanol.

[Table 5]

| | | | Example |
|---|---|---|---|
| | | | 14 |
| | | | Mg-type |
| Contact step | Raw material tea extract | Form | Extract solution 1 |
| | Amount of extract solution/amount of resin | [V/V] | 50 |
| | SV | [/hr] | 7.7 |
| | Exchanging ion | - | Mg |
| | Resin | - | Strongly acidic |
| Purified tea extract after contact treatment | | Form | Liquid |
| | Non-polymer catechins | [Mass%] | 0.985 |
| | Potassium | [Mass%] | 0.16 |
| | Magnesium | [Mass%] | 0.19 |
| | Lithium | [Mass%] | 0 |
| | Sodium | [Mass%] | 0.01 |
| | pH (20°C) | | 5.4 |
| Purified tea extract after pulverization | | | Purified tea extract 16 |
| | | Form | Solid |
| | Non-polymer catechins in solids | [Mass%] | 32.9 |
| | Potassium in solids | [Mass%] | 5.4 |
| | Magnesium in solids | [Mass%] | 6.3 |
| | Lithium in solids | [Mass%] | 0 |
| | Sodium in solids | [Mass%] | 0.4 |
| | Magnesium/non-polymer catechins | Mass ratio | 0.191 |
| | Lithium/non-polymer catechins | Mass ratio | 0 |
| | Potassium/non-polymer catechins | Mass ratio | 0.165 |
| Elution ratio of non-polymer catechins | | [%] | 97.2 |

Table 5 shows that the purified tea extract having high solubility of the non-polymer catechins in the solvent can be obtained by the column mode as well.

The analysis data of the solubility tests of the non-polymer catechins in ethanol shown in Tables 1 to 5 is shown below.

- The results of the dissolution test for the tea extract 1 shows that the supernatant liquid contained 6.37 mass% of the non-polymer catechins and 11.02 mass% of dry solids.

- The results of the dissolution test for the purified tea extract 1 shows that the supernatant liquid contained 6.93 mass% of the non-polymer catechins and 12.02 mass% of dry solids.
- The results of the dissolution test for the purified tea extract 2 shows that the supernatant liquid contained 6.94 mass% of the non-polymer catechins and 11.97 mass% of dry solids.
- The results of the dissolution test for the purified tea extract 3 shows that the supernatant liquid contained 6.71 mass% of the non-polymer catechins and 11.56 mass% of dry solids.
- The results of the dissolution test for the purified tea extract 4 shows that the supernatant liquid contained 6.85 mass% of the non-polymer catechins and 13.04 mass% of dry solids.
- The results of the dissolution test for the purified tea extract 5 shows that the supernatant liquid contained 6.48 mass% of the non-polymer catechins and 10.96 mass% of dry solids.
- The results of the dissolution test for the purified tea extract 6 shows that the supernatant liquid contained 6.13 mass% of the non-polymer catechins and 9.97 mass% of dry solids.
- The results of the dissolution test for the purified tea extract 7 shows that the supernatant liquid contained 6.86 mass% of the non-polymer catechins and 13.62 mass% of dry solids.
- The results of the dissolution test for the purified tea extract 8 shows that the supernatant liquid contained 6.82 mass% of the non-polymer catechins and 12.37 mass% of dry solids.
- The results of the dissolution test for the purified tea extract 9 shows that the supernatant liquid contained 6.68 mass% of the non-polymer catechins and 11.84 mass% of dry solids.
- The results of the dissolution test for the purified tea extract 10 shows that the supernatant liquid contained 6.86 mass% of the non-polymer catechins and 12.3 mass% of dry solids.
- The results of the dissolution test for the purified tea extract 11 shows that the supernatant liquid contained 6.88 mass% of the non-polymer catechins and 13.3 mass% of dry solids.
- The results of the dissolution test for the purified tea extract 12 shows that the supernatant liquid contained 6.62 mass% of the non-polymer catechins and 14.8 mass% of dry solids.
- The results of the dissolution test for the purified tea extract 13 shows that the supernatant liquid contained 6.19 mass% of the non-polymer catechins and 15.7 mass% of dry solids.
- The results of the dissolution test for the purified tea extract 14 shows that the supernatant liquid contained 6.80 mass% of the non-polymer catechins and 11.34 mass% of dry solids.
- The results of the dissolution test for the purified tea extract 15 shows that the supernatant liquid contained 6.85 mass% of the non-polymer catechins and 11.33 mass% of dry solids.
- The results of the dissolution test for the purified tea extract 16 shows that the supernatant liquid contained 7.09 mass% of the non-polymer catechins and 12.16 mass% of dry solids.

In addition, a dissolution test for the non-polymer catechins was carried out using a solution obtained by dissolving the purified tea extract 2 obtained in Example 2 in a mixed solvent of ethanol and water containing ethanol at a concentration of 95 mass%, 85 mass%, 80 mass%, or 75 mass%, and the elution ratio of the non-polymer catechins in each of the solutions containing ethanol at different concentrations was calculated. Table 6 shows the results.

Example 15

The dissolution test was carried out using a solution obtained by dissolving the purified tea extract 2 in the mixed solvent of ethanol and water containing ethanol at a concentration of 95 mass% . The results suggested that the supernatant liquid contained 6.05 mass% of the non-polymer catechins and 9.22 mass% of dry solids, and the elution ratio of the non-polymer catechins was 82.4%.

Example 16

The dissolution test was carried out using a solution obtained by dissolving the purified tea extract 2 in the mixed solvent of ethanol and water containing ethanol at a concentration of 85 mass% . The results suggested that the supernatant liquid contained 6.89 mass% of the non-polymer catechins and 12.87 mass% of dry solids, and the elution ratio of the non-polymer catechins was 97.0%.

Example 17

The dissolution test was carried out using a solution obtained by dissolving the purified tea extract 2 in the mixed solvent of ethanol and water containing ethanol at a concentration of 80 mass% . The results suggested that the supernatant liquid contained 6.88 mass% of the non-polymer catechins and 13.71 mass% of dry solids, and the elution ratio of the non-polymer catechins was 98.1%.

Example 18

The dissolution test was carried out using a solution obtained by dissolving the purified tea extract 2 in the mixed solvent of ethanol and water containing ethanol at a concentration of 75 mass% . The results suggested that the supernatant liquid contained 6.86 mass% of the non-polymer catechins and 14.42 mass% of dry solids, and the elution ratio of the non-polymer catechins was 98.6%.

Comparative Example 4

The dissolution test was carried out using a solution obtained by dissolving the tea extract 1 obtained in Comparative Example 1 in the mixed solvent of ethanol and water containing ethanol at a concentration of 95 mass%. The results suggested that the supernatant liquid contained 5.00 mass% of the non-polymer catechins and 7.43 mass% of dry solids, and the elution ratio of the non-polymer catechins was 67.2%.

Comparative Example 5

The dissolution test was carried out using a solution obtained by dissolving the tea extract 1 in the mixed solvent of ethanol and water containing ethanol at a concentration of 85 mass%. The results suggested that the supernatant liquid contained 6.72 mass% of the non-polymer catechins and 12.20 mass% of dry solids, and the elution ratio of the non-polymer catechins was 94.5%.

Comparative Example 6

The dissolution test was carried out using a solution obtained by dissolving the tea extract 1 in the mixed solvent of ethanol and water containing ethanol at a concentration of 80 mass%. The results suggested that the supernatant liquid contained 6.79 mass% of the non-polymer catechins and 13.22 mass% of dry solids, and the elution ratio of the non-polymer catechins was 96.9%.

Comparative Example 7

The dissolution test was carried out using a solution obtained by dissolving the tea extract 1 in the mixed solvent of ethanol and water containing ethanol at a concentration of 75 mass%. The results suggested that the supernatant liquid contained 6.73 mass% of the non-polymer catechins and 13.88 mass% of dry solids, and the elution ratio of the non-polymer catechins was 96.8%.

[Table 6]

| | | | Example | Comparative Example | Example | Comparative Example | Example | Comparative Example | Example | Comparative Example |
|---|---|---|---|---|---|---|---|---|---|---|
| | | | 15 | 4 | 16 | 5 | 17 | 6 | 18 | 7 |
| Contact step | Exchanging ion | - | Mg | - | Mg | - | Mg | - | Mg | - |
| Elution step | Concentration of ethanol | [wt-%] | 95 | 95 | 85 | 85 | 80 | 80 | 75 | 75 |
| | Elution ratio of non-polymer catechins | [%] | 82.4 | 67.2 | 97.0 | 94.5 | 98.1 | 96.9 | 98.6 | 96.8 |

Table 6 shows that, when the tea extract is brought into contact with the magnesium-type or lithium-type cation exchange resin, the purified tea extracts having enhanced solubility of the non-polymer catechins can be obtained in the cases where the concentrations of ethanol are 75% or more.

## Claims

1. A production method for a purified tea extract, comprising bringing a tea extract into contact with a hydrogen-type (H-type) cation exchange resin wherein the hydrogen ions have been exchanging for magnesium ions or lithium ions.

2. The production method for a purified tea extract according to claim 1, wherein the cation exchange resin comprises a strongly acidic ion exchange resin.

3. The production method for a purified tea extract according to claim 1 or 2, wherein the tea extract has a pH of from 2 to 6 when brought into contact with the cation exchange resin.

4. The production method for a purified tea extract according to any one of claims 1 to 3, wherein a concentration of the non-polymer catechins in the tea extract is from 0.1 to 10 mass%.

5. The production method for a purified tea extract according to any one of claims 1 to 4, wherein an amount of the cation exchange resin used is from 1 to 200 in terms of volume ratio of tea extract/cation exchange resin.

6. The production method for a purified tea extract according to any one of claims 1 to 5, wherein the cation exchange resin comprises, as a matrix, a styrene-based resin, an acrylic acid-based resin, or a methacrylic acid-based resin.

7. The production method for a purified tea extract according to any one of claims 1 to 6, wherein the cation exchange resin comprises a gel-type or porous-type cation exchange resin.

8. The production method for a purified tea extract according to any one of claims 1 to 7, wherein the tea extract is brought into contact with the cation exchange resin at a temperature of from 0 to 40°C.

9. The production method for a purified tea extract according to any one of claims 1 to 8, wherein the tea extract is brought into contact with the cation exchange resin in a batch mode.

10. The production method for a purified tea extract according to claim 9, wherein the tea extract is brought into contact with the cation exchange resin in the batch mode for from 0.1 to 5 hours.

11. The production method for a purified tea extract according to any one of claims 1 to 8, wherein the tea extract is brought into contact with the cation exchange resin in a column mode.

12. The production method for a purified tea extract according to claim 11, wherein the tea extract is brought into contact with the cation exchange resin in the column mode at a space velocity of 10/hr or less.

13. A purified tea extract that is obtainable by the method of any one of claims 1-12, having a mass ratio of (magnesium+lithium)/non-polymer catechins of 0.1 or more, a mass ratio of potassium/non-polymer catechins of 0.26 or less, and a content of non-polymer catechins in a residue obtained by drying a sample with an electric thermostat dryer at 105°C for 3 hour of 25 mass% or more and 45 mass% or less.

14. The purified tea extract according to claim 13, wherein the purified tea extract has a total content of magnesium and lithium in a residue obtained by drying a sample with an electric thermostat dryer at 105°C for 3 hours of from 3 to 30 mass%.

15. The purified tea extract according to claim 13 or 14, wherein the purified tea extract has a content of potassium in a residue obtained by drying a sample with an electric thermostat dryer at 105°C for 3 hours of 8.5 mass% or less.

16. The purified tea extract according to any one of claims 13 to 15, wherein the purified tea extract has a content of the non-polymer catechins in a residue obtained by drying a sample with an electric thermostat dryer at 105°C for 3 hours of from 25 to 45 mass%.

**Patentansprüche**

1. Herstellungsverfahren für einen gereinigten Tee-Extrakt, umfassend Inkontaktbringen eines Tee-Extrakts mit einem Kationenaustauschharz vom Wasserstofftyp (H-Typ), worin die Wasserstoffionen gegen Magnesiumionen oder Lithiumionen ausgetauscht wurden.

2. Herstellungsverfahren für einen gereinigten Tee-Extrakt gemäß Anspruch 1, wobei das Kationenaustauschharz ein stark saures Ionenaustauschharz umfasst.

3. Herstellungsverfahren für einen gereinigten Tee-Extrakt gemäß Anspruch 1 oder 2, wobei der Tee-Extrakt einen pH-Wert von 2 bis 6 beim Inkontaktbringen mit dem Kationenaustauschharz aufweist.

4. Herstellungsverfahren für einen gereinigten Tee-Extrakt gemäß einem der Ansprüche 1 bis 3, wobei die Konzentration an nicht-polymeren Catechinen im Tee-Extrakt von 0,1 bis 10 Masse-% beträgt.

5. Herstellungsverfahren für einen gereinigten Tee-Extrakt gemäß einem der Ansprüche 1 bis 4, wobei die eingesetzte Menge des Kationenaustauschharzes von 1 bis 200, ausgedrückt als Volumenverhältnis von Tee-Extrakt/Kationenaustauschharz, beträgt.

6. Herstellungsverfahren für einen gereinigten Tee-Extrakt gemäß einem der Ansprüche 1 bis 5, wobei das Kationenaustauschharz als eine Matrix ein Styrolbasiertes Harz, ein Acrylsäure-basiertes Harz oder ein Methacrylsäure-basiertes Harz umfasst.

7. Herstellungsverfahren für einen gereinigten Tee-Extrakt gemäß einem der Ansprüche 1 bis 6, wobei das Kationenaustauschharz ein Kationenaustauschharz vom Geltyp oder porösen Typ umfasst.

8. Herstellungsverfahren für einen gereinigten Tee-Extrakt gemäß einem der Ansprüche 1 bis 7, wobei der Tee-Extrakt mit dem Kationenaustauschharz bei einer Temperatur von 0 bis 40°C in Kontakt gebracht wird.

9. Herstellungsverfahren für einen gereinigten Tee-Extrakt gemäß einem der Ansprüche 1 bis 8, wobei der Tee-Extrakt mit dem Kationenaustauschharz batchweise in Kontakt gebracht wird.

10. Herstellungsverfahren für einen gereinigten Tee-Extrakt gemäß Anspruch 9, wobei der Tee-Extrakt mit dem Kationenaustauschharz batchweise für 0,1 bis 5 Stunden in Kontakt gebracht wird.

11. Herstellungsverfahren für einen gereinigten Tee-Extrakt gemäß einem der Ansprüche 1 bis 8, wobei der Tee-Extrakt mit dem Kationenaustauschharz in einem Säulenmodus in Kontakt gebracht wird.

12. Herstellungsverfahren für einen gereinigten Tee-Extrakt gemäß Anspruch 11, wobei der Tee-Extrakt mit dem Kationenaustauschharz im Säulenmodus bei einer Raumgeschwindigkeit von 10/h oder weniger in Kontakt gebracht wird.

13. Gereinigter Tee-Extrakt, erhältlich durch das Verfahren gemäß einem der Ansprüche 1 bis 12, mit einem Masseverhältnis von (Magnesium+Lithium)/nicht-polymeren Catechinen von 0,1 oder mehr, einem Massenverhältnis von Kalium/nicht-polymeren Catechinen von 0,26 oder weniger und einem Gehalt an nicht-polymeren Catechinen in einem Rest, erhalten durch Trocknen einer Probe mit einem elektrischen Thermostat-Trockner bei 105°C während 3 Stunden, von 25 Masse-% oder mehr und 45 Masse-% oder weniger.

14. Gereinigter Tee-Extrakt gemäß Anspruch 13, wobei der gereinigte Tee-Extrakt einen Gesamtgehalt an Magnesium und Lithium in einem Rest, erhalten durch Trocknen einer Probe mit einem elektrischen Thermostat-Trockner bei 105°C während 3 Stunden, von 3 bis 30 Masse-% aufweist.

15. Gereinigter Tee-Extrakt gemäß Anspruch 13 oder 14, wobei der gereinigte Tee-Extrakt einen Gehalt an Kalium in einem Rest, erhalten durch Trocknen einer Probe mit einem elektrischen Thermostat-Trockner bei 105°C während 3 Stunden, von 8,5 Masse-% oder weniger aufweist.

16. Gereinigter Tee-Extrakt gemäß einem der Ansprüche 13 bis 15, wobei der gereinigte Tee-Extrakt einen Gehalt an nicht-polymeren Catechinen in einem Rest, erhalten durch Trocknen einer Probe mit einem elektrischen Thermostat-Trockner bei 105°C während 3 Stunden, von 25 bis 45 Masse-% aufweist.

## Revendications

1. Procédé de production d'un extrait de thé purifié, comprenant la mise en contact d'un extrait de thé avec une résine échangeuse de cations de type hydrogène (type-H), dans lequel les ions hydrogène ont été échangés contre des ions magnésium ou des ions lithium.

2. Procédé de production d'un extrait de thé purifié selon la revendication 1, dans lequel la résine échangeuse de cations comprend une résine échangeuse d'ions fortement acide.

3. Procédé de production d'un extrait de thé purifié selon la revendication 1 ou 2, dans lequel l'extrait de thé présente un pH de 2 à 6 lorsqu'il est mis en contact avec la résine échangeuse de cations.

4. Procédé de production d'un extrait de thé purifié selon l'une quelconque des revendications 1 à 3, dans lequel la concentration des catéchines non polymères dans l'extrait de thé est de 0,1 à 10 % en masse.

5. Procédé de production d'un extrait de thé purifié selon l'une quelconque des revendications 1 à 4, dans lequel une quantité de la résine échangeuse de cations utilisée est de 1 à 200 en termes de rapport en volume d'extrait de thé/résine échangeuse de cations.

6. Procédé de production d'un extrait de thé purifié selon l'une quelconque des revendications 1 à 5, dans lequel la résine échangeuse de cations comprend, en tant que matrice, une résine à base de styrène, une résine à base d'acide acrylique, ou une résine à base d'acide méthacrylique.

7. Procédé de production d'un extrait de thé purifié selon l'une quelconque des revendications 1 à 6, dans lequel la résine échangeuse de cations comprend une résine échangeuse de cations de type gel ou de type poreux.

8. Procédé de production d'un extrait de thé purifié selon l'une quelconque des revendications 1 à 7, dans lequel l'extrait de thé est mis en contact avec la résine échangeuse de cations à une température de 0 à 40°C.

9. Procédé de production d'un extrait de thé purifié selon l'une quelconque des revendications 1 à 8, dans lequel l'extrait de thé est mis en contact avec la résine échangeuse de cations en mode discontinu.

10. Procédé de production d'un extrait de thé purifié selon la revendication 9, dans lequel l'extrait de thé est mis en contact avec la résine échangeuse de cations en mode discontinu pendant 0,1 à 5 heures.

11. Procédé de production d'un extrait de thé purifié selon l'une quelconque des revendications 1 à 8, dans lequel l'extrait de thé est mis en contact avec la résine échangeuse de cations en mode colonne.

12. Procédé de production d'un extrait de thé purifié selon la revendication 11, dans lequel l'extrait de thé est mis en contact avec la résine échangeuse de cations en mode colonne à une vitesse spatiale de 10/heure ou moins.

13. Extrait de thé purifié qui est susceptible d'être obtenu par le procédé selon l'une quelconque des revendications 1-12, présentant un rapport massique de (magnésium+lithium)/catéchines non polymères de 0,1 ou plus, un rapport massique de potassium/catéchines non polymères de 0,26 ou moins, et une teneur en catéchines non polymères dans un résidu obtenu en séchant un échantillon avec un sécheur à thermostat électrique à 105°C pendant 3 heures de 25 % en masse ou plus, et de 45 % en masse ou moins.

14. Extrait de thé purifié selon la revendication 13, dans lequel l'extrait de thé purifié présente une teneur totale en magnésium et en lithium dans un résidu obtenu en séchant un échantillon avec un sécheur à thermostat électrique à 105°C pendant 3 heures de 3 à 30 % en masse.

15. Extrait de thé purifié selon la revendication 13 ou 14, dans lequel l'extrait de thé purifié présente une teneur totale en potassium dans un résidu obtenu en séchant un échantillon avec un sécheur à thermostat électrique à 105°C pendant 3 heures de 8,5 % en masse ou moins.

**16.** Extrait de thé purifié selon l'une quelconque des revendications 13 à 15, dans lequel l'extrait de thé purifié présente une teneur en catéchines non polymères dans un résidu obtenu en séchant un échantillon avec un sécheur à thermostat électrique à 105°C pendant 3 heures de 25 à 45 % en masse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1591017 A1
- EP 2119374 A1
- JP 2010263816 A
- JP 2005270094 A
- JP 2004159634 A
- JP 11504224 A
- JP 59219384 A
- JP 4020589 A
- JP 5260907 A
- JP 5306279 A